Europäisches Patentamt

European Patent Office

Office européen des brevets

(11) Publication number: **0 256 835**
**A2**

## (12) EUROPEAN PATENT APPLICATION

(21) Application number: 87307083.3

(22) Date of filing: 10.08.87

(51) Int. Cl.⁴: **G 06 F 15/40**

(30) Priority: 08.08.86 JP 186178/86

(43) Date of publication of application:
**24.02.88 Bulletin 88/08**

(84) Designated Contracting States: **DE FR GB IT NL**

(71) Applicant: **TAJIRI KIKAI KOGYO KABUSHIKI KAISHA**
**19-16 Ohmorikita 1-chome Ohta-ku**
**Tokyo (JP)**

(72) Inventor: **Ishida, Keiko**
**No. 19-303, 1, Toyoshikidai 1-chome**
**Kashiwa-shi Chiba-ken (JP)**

(74) Representative: **Davies, Christopher Robert et al**
**Frank B. Dehn & Co. Imperial House 15-19 Kingsway**
**London WC2B 6UZ (GB)**

(54) **Electronic dictionary.**

(57) In an electronic dictionary data E of a word indexed (index word) C and the description D for the index word C are stored in a large capacity memory medium (ROM), and the data E is read from the memory medium by means of a ROM player, thereby making it possible to effect display, printing or sound output. An index word C once indexed and all or a portion of its description are automatically or manually preserved in a memory of the ROM player to prepare a word list. Thus, a learning assistance function is provided to call necessary words from the list, thus permitting a user to conduct a memory text or the like. The electronic dictionary may be used as an electronic single language dictionary in which the word indexed (index word) C and its description D are indicated by a single language, e.g. the English-English dictionary etc. or may be used as an electronic multiple or plural language dictionary in which the index word C and its description D are indicated by different languages e.g., the English-Japanese dictionary etc.

FIG. 1

EP 0 256 835 A2

**Description**

Electronic Dictionary

The present invention relates to an electronic dictionary wherein date consisting of words indexed (index words) and the descriptions for or corresponding to the index words is stored in a large capacity memory medium (ROM), and is thus read from the memory medium by means of a ROM player, thereby making it possible to provide a displayed, printed or sound output.

In recent years, optical disks or compact disks (which will be simply referred to as "CD" hereinafter) have appeared for use as digital storage or memory media for images or music.

Where the contents of books are memorized even when a CD having a small capacity is used, the contents corresponding from ten to one hundred books can be stored per each CD, thus providing the scale equivalent to that of a small electronic library. It has been recently announced that an electronic dictionary can be made up by storing the contents of an English encyclopedia in about twenty volumes in total into the CD. In this example, the contents of the encyclopedia in twenty volumes were stored only into about 20% of the storage capacity (540 MB) of the CD.

When compared to printed dictionaries electronic dictionaries are advantageous in that they are simple to index and have the ability to index at a high speed, and are easy to see because a large-sized character display can be used. On the other hand, the problems therewith are as follows.

(a) Since the descriptions for the index words are only given in a conventional dictionary format, it is necessary for the purposes of memorising a particular list of words to prepare a separate list of words and to successively identify the ones which have been memorized by repeatedly observing the list, thus to delete them from the list or to skip them at the time of repetition. For this reason, much time and labor was necessary.

(b) Since the electronic dictionaries described above have a large scale comparable to that of electronic libraries, they are useless because their dimensions are too large for use as a portable small electronic dictionary.

(c) Since the conventional CD is not directed exclusively to an electronic dictionary, but is constituted for general use, its operation is too complicated. In addition, since using CD for general prupose is considered to be important and thus the CD is constituted so that it is connectable to a personal computer or a small-sized computer etc., the entire system becomes large and expensive even when combined with a small and inexpensive personal computer.

(d) Generally, the CD reader is of a structure allowing the slidable deck to be retracted to set a CD thereinto, to permit the CD readily to be inserted and withdrawn. This permits easy exchange of many kinds of CDs, thus enabling the CD reader to be widely used for many purposes. However, such a structure becomes complicated and expensive. In addition, the CD reading unit would necessarily communicate with air, so that dust is admitted thereinto from the outside, leading to the likelihood of occurence of error reading or other problems.

(e) IC memory cards or Magnetic bubbles presently available are stable against dust. However, because of their small memory density, they become too large in dimension and expensive when applied to a large capacity storage medium.

Viewed from one aspect the invention provides an electronic dictionary comprising a large capacity memory medium for storing data E consisting of index words C and descriptions D relating to said index words C, and means for reading said data E from said memory medium to provide a visual display and, optionally, a printed or sound output, said electronic dictionary having a learning assistance function which automatically or manually enters all or a portion of the index words C and all or part of the corresponding descriptions D into a memory so as to prepare a stored word list, whereby the memorized words and/or corresponding descriptions D can be individually displayed on a display unit, thereby to assist a user in learning the words.

At least in a preferred embodiment the present invention provides an electronic dictionary which is small and easy in operation, is portable may be free from faults over a long time and be maintenance-free, and is inexpensive by using, as storage media, microcompact disks, or IC memory cards or magnetic bubbles or the like which might be available in smaller sizes in the future.

The electronic dictionary operates to automatically or manually preserve words indexed in a memory of the reading means or ROM player to prepare a word list, thus making it possible for the user to conduct memorising of the words.

The descriptions D preferably include at least one of a pronunciation symbol for each index word C, the translation of the index word, and a correlated word F related to the index word C i.e.a modified word of a part of speech, modified word of gender, number or time, idiomatic phrase, or idiom or the like. An index word C once indexed and all of its description D or a desired portion thereof are automatically or manually stored in a memory of the reading means or ROM player. Thus, a leaning assistance function is provided such that memory practice of words can be conducted by individually calling each word and/or its description on the display unit. The electronic dictionary of the present invention is applicable not only to a single dictionary, e.g., the English-Japanese dictionary or the Japanese-English dictionary etc. among various dictionaries, but also to an electronic dictionary in which desired two kinds of dictionaries or more are stored in pairs.

An embodiment of the invention will now be described, by way of example only, with reference to the drawings, wherein:

Fig. 1 is a block diagram illustrating the functioning of an electronic dictionary in accordance with the present invention, and

Fig. 2 is a perspective view illustrating the structure of an electronic dictionary in accordance with the present invention.

To realize the object that an electronic dictionary of the invention is small-sized, stable and inexpensive, and is portable, it is required to prepare a ROM as small as possible, or particularly when a disk is employed, a novel standarized microcompact disk (which is abbreviated as "MCD" hereinafter) having a necessary and sufficient memory capacity.

For permitting such an electronic dictionary to be received into a breast pocket which is the smallest among pockets of clothing, it is preferable that one side of the small-sized ROM or the outer diameter of MCD is less than 3 inches in view of the dimension of the breast pocket.

When viewed from the number of characters of the dictionary of printed matter, the necessary memory capacity is as follows. Chinese characters require 2B (bytes) for expression of one character. The necessary memory capacities for small, medium and large dictionaries being sold in book storesin connection with the English-Japanese dictionary as a typical example are examined. The results thereof are as follows.

|  | English-Japanese | English-Japanese + Japanese-English |
| --- | --- | --- |
| small dictionary | ∿ 3 MB | ∿ 6 MB |
| medium dictionary | ∿ 6 MB | ∿ 12 MB |
| large dictionary | ∿ 40 MB | ∿ 80 MB |

Since it is desirable that the "English-Japanese" dictionary and the "Japanese-English" dictionary are used in a pair from a viewpoint of practical use, it is desirable that the capacity is approximately two times the capacity of the English-Japanese dictionary. It is enough that the capacity is less than 128 MB even if the capacity is estimated sufficiently. Even in the case of a small "English-Japanese" dictionary of which memory capacity is minimum, a capacity of more than 2 MB is required.

For a memory card as a small-sized ROM,except for a disk, it will be constituted with mask ROM, EPROM, or EEPROM etc. because of necessity of non-volatile property. However, the memory medium has a low memory density, e.g., 256 K bit to 1 M bit per each chip. When an electronic dictionary having memory capacity of 2 MB which is an example of the minimum memory capacity is made up, 96 to 24 chips are required. The electronic dictionary becomes large-sized and expensive. The magnetic bubbles are non-volatile and have a relatively high memory density (4M bit/chip). However, the dimension of the peripheral magnetic circuit/drive circuit per each chip is large. When an electronic dictionary having a memory capacity of 3 MB is made up, the dimension is too large and its cost is also too high.

However, both memory densities of memory cards and magnetic bubbles increase four times about every three years. Accordingly, it is expected that they will become small-sized and inexpensive to an extent that they can be put to practical use. Further, in the case of languages using phonetic symbols or characters, the necessary capacity will be reduced to about one half. Such an electronic dictionary may be realized early. Accordingly, the memory card and the megnetic bubble can be used for the small-sized ROM of the invention. They include no movable parts, so that they are hardly influenced by dust or vibration etc. An explanation however will be made in connection with the case where the MCD which can be realized at present is used.

A conventional CD is constituted as a flat disk having an outer diameter of 120 mm and includes a concentric inactive region having a diameter of about 45 mm in the center thereof. Into the region having an effective area expressed as [$\pi/4$ (120)$^2$ - $\pi/4$ (45)$^2$] mm$^2$, about 540 MB can be stored as the number of bytes utilized for a user. The memory density thereof is fixed within the effective area. When it is assumed that the outer diameter is 3 inches (about 75 mm) and MCD is made up at the same memory density to store data of 128 MB therein, it is sufficient that the inactive region has a diameter approximately equal to that of the inactive region of the conventional CD. In this case, the width in a radial direction of an annular section of the inactive area is about 15 mm. Thus, the MCD which has a small difference between an inner and an outer radius and a simple and inexpensive track selection mechanism can be used. Since the difference between the circumferential line speed of the inside track and that of the outside track at a certain MCD rotational frequency is reduced, a fixed rotational frequency system may be employed. Even if rotational frequency control is conducted so that the circumferential speed is fixed, the ratio of the control rotational frequency is nearly equal to 1. Thus, a control system which is simple and inexpensive as a servo control system can be used.

An implementation is possible such that the MCD itself is also small-sized and its thickness becomes small as well, resulting in a low cost MCD. In addition, various modifications may be implemented such that the diameter of the inactive region is further reduced for the purpose of allowing the outer radius to be less than 3 inches, the diameter of the inactive region is further reduced for the purpose of realizing low cost by lowering the memory density, and the like.

It is desirable that the dictionary of the invention can be used immediately when powered. For this purpose, it is desirable that the MCD is incorporated within the ROM player without inserting the MCD into the ROM player or detaching it therefrom every use. However, if the MCD is left for a long time while being incorporated therein, or the MCD is carried within a pocket or a bag, dust may be admitted into the MCD, with the result that trouble or error reading is likely to occur. Accordingly, the MCD and a track selection mechanism for which precision is required are accommodated into an accommodating room of dust-proof structure connected to the outside through the drive shaft of the track selection mechanism and an electric wire, thus preventing dust from being admitted. By opening and closing the cover of the accommodating room, the exchange of the MCD is carried out.

The cover, the penetration shaft, and the penetration electric wire are sealed from air by means of packing such as blister plastic etc. Since the employment of a method of fitting or detaching the cover by means of screws etc. makes it difficult to open or close the cover, easy fitting or detaching, or exchange of the MCD can be prevented. When needed, seals etc. may be provided, thereby prohibiting a user from opening or closing the cover, thus clarifying the maintenance responsibility. However, there may also be a need to adapt to an electronic dictionary used for one language for use with a different language, for use with other scales (small, medium and large dictionaries etc.), or for use as technical dictionaries etc. Accordingly, it is desirable that the MCD can be exchanged, but that the exchange is difficult as far as possible. For this purpose, there may be employed a method such that fitting and detaching of the MCD cannot be effected unless, e.g., three operations or more are conducted.

It is preferable that the electronic dictionary of the invention can be handled as simply as possible. For this reason, it is desirable that the electronic dictionary is of unitary structure that the MCD is incorporated within the ROM player, and that a minimum number of keys are provided on the control unit of the ROM player, thus excluding general use as far as possible to realize specialised use.

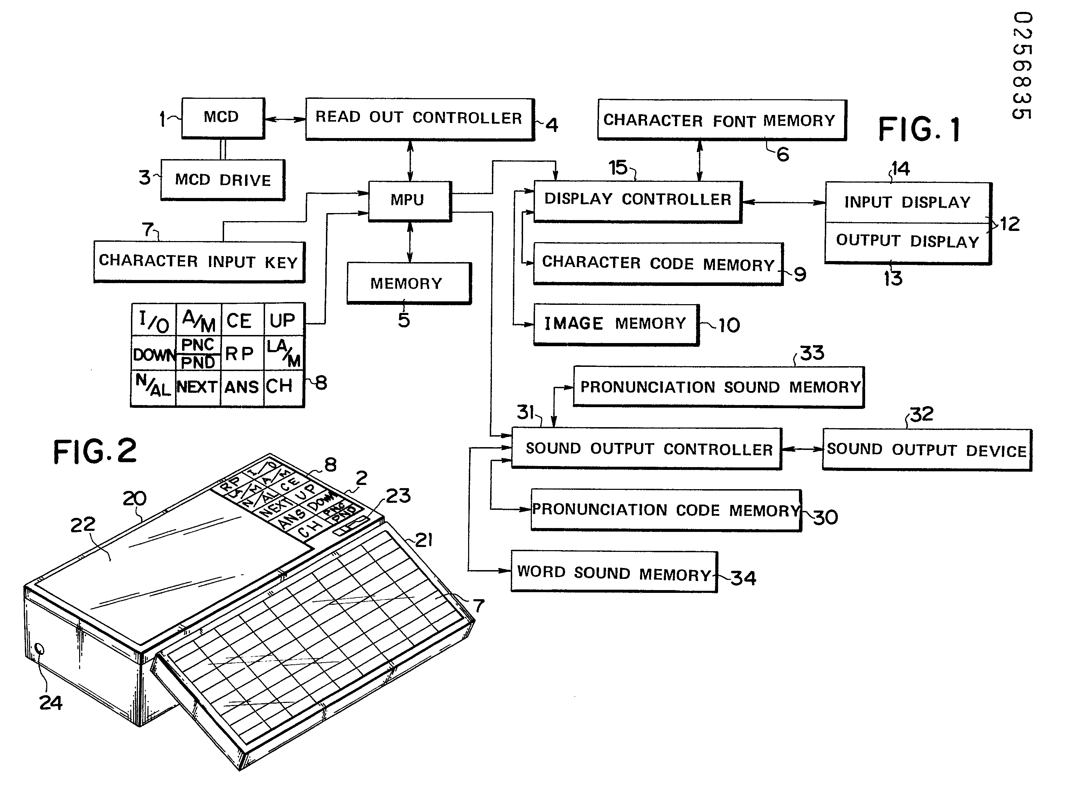

Fig. 1 is a block diagram illustrating an electronic two language dictionary wherein such a MCD is used as the small-sized ROM and the English-Japanese dictionary and the Japanese-English dictionary are accommodated as a pair therein.

In this figure, MCD denotes a microcompact disk. Reference numeral 3 denotes a MCD drive for rotating the MCD, which is composed of motor and a servo system etc. Reference numeral 4 denotes a readout controller for reading data from the MCD, which includes an optical reader for the MCD, a track selection mechanism and its controller, a mutual conversion circuit for effecting conversion of the user byte (8 bits) to the CD byte (e.g., 14 bits) and vice versa, an error correction circuit, and the like. The technologies which have been employed in conventional CD can be applied to these circuits. A portion of these functions may be realized by using a microcomputer MPU.

Reference numeral 5 denotes a RAM memory associated with the MPU. Reference numeral 7 denotes a key board 7 for inputting characters. Since the kinds of characters in Japanese are too many in the case of the English-Japanese and the Japanese-English dictionaries, it is desirable to input characters in the form of Roman letters. Such an inputting method is convenient in that inputting operation can be performed using the aplhabet in either case of the English-Japanese dictionary or the Japanese-English dictionary. In addition, in the case of languages such that the kinds of letters are not so many and the character fonts are extremely different from each other as in the Arabic, a method to indicate at least two kinds of different characters such as Katakana or Roman letters on the key top, and select the kind by operating the shift key, or a method to fit an overlay over the key or the like may be employed.

Reference numeral 8 denotes a function key group. A key labeled [A/M] is an input mode key, a key labeled [I/O] is an input/output key, a key labeled [CE] is a clear key, a key labeled [↑] is a scroll up key, a key labeled [↓] is a scroll DOWN key, keys labeled [PNC] and [PND] are pronunciation keys, a key labeled [LA/M] is a learning mode key, a key labeled [N/AL] is a select key, a key labeled [RP] is a repeat key, a key labeled [NEXT] is a next word key, a key labeled [CH] is an attribute code change key.

Reference numeral 6 denotes a character font memory for generation of character fonts. When a language used is fixed, a mask ROM may be used. Further, there may be employed a method using a RAM to store character font data in the MCD in advance, thus to effect copying from the MCO to RAM as a portion of the initial sequence when powered. The last-mentioned method is advantageous in the case that various languages are handled by exchange of MCD or in the same MCD. In addition, an EEPROM may be used.

Reference numeral 15 denotes a display controller. This controller 15 writes a character sent out from the MPU into an image memory 10 provided therein by making use of the character font memory 6 depending on whether the display unit 12 is of storage type or refresh type and drives the display unit 12.

The display unit 12 is divided into an output display section 13 and an input display section 14. For these display sections 13 and 14, a planar type display device of liquid crystal, photo-chromic, or EL (Electroluminescence) etc. may be used. For the time being, liquid crystal display such as used in a portable liquid crystal television is suitable for the display device for reasons of lower power dissipation, low voltage, use results, cost performance etc., but it may be substituted by an externally connectible home television or the like. Instead of display, printing may be conducted using a printer of a standard type. Further, a method may be employed to allow the display unit 12 to have a function of touch panel, thereby to display a character key or a functional key in the input mode through the MPU to effect inputting operation by touching the portion displayed. This method permits the character input key 7 and the functional key group 8 to be omitted, thus enabling the dictionary to be further small-sized. Furthermore, in place of the character input key 7 etc., a microphone and a voice recognition circuit may be used to conduct a sound inputting.

For the purpose of allowing the electronic dictionary of the invention to be small-sized and of desk-top or carrying type etc., it is preferable to employ a structure in which all components are integrally formed.

It is desirable to construct the keyboard using pressure-sensitive elements etc. so that it is of the planar type. Since a liquid crystal which has a touch-inputting function permits the character key board to be omitted, such a display is advantageous in that it is not only effective in view of small-sized implementation and simplicity, but also makes it easy to change the character font display of the key top when conversion of the language kind is conducted by exchange of MCD etc.

It is needless to say that a power supply can be constituted by an ac power supply. The employment of a battery as the power supply is more convenient. Since a power supply pack which has a function equivalent to that of a battery due to conversion from ac to dc is widely used, the additional provision of such a power supply pack to use its dc power supply is more convenient. It is also possible to use a chargeable battery.

Since it is not desirable that the power switch is unnecessarily cut off or turned on due to the influence of beginning of the rotation of MCD, the initial sequence or the like, it is desirable that the power switch is of slide type.

When the electronic dictionary is of carrying type, the area of the display device is limited and the capacity of the output display is also limited. There are many instances where the number of characters displayed is smaller than that of the desk-top type, so that all the descriptions D are not displayed at the same time. In such a case, the above-mentioned scrolling function is helpful.

For protecting the liquid crystal display or the functional key board etc. from impact or pressure externally applied during carrying of the electronic dictionary, the provision of a cover is preferable. This cover may be in the form of a book cover, or may be provided on the dictionary body so as form a single pivotable title leaf. Where the touch panel is not used, it is convenient to provide the planar type character input key 7 on the inside surface of the single pivotable cover 20.

Referring to Fig. 2, there is shown a substantially rectangular casing of the dictionary body, which is designated at 21. When the size of the electronic dictionary is chosen to be in correspondence with any one of standard sizes of books being published at present, it is convenient to exhibit it on a book shelf or to carry it within a bag.

Reference numerals 22 and 23 denote a liquid crystal display and a slide type power switch which have been mentioned above, respectively. In addition, reference numeral 24 denotes a dc power connection terminal from an external power supply.

The learning assistance function of the illustrated embodiment will be now explained. It is desirable that not only students but also public persons can remember words once indexed. For students, the degree of their memories can be appraised by tests. The results affect promotion, admission to a school of higher grade, or graduation etc. University students or public persons endeavour to memorize new words for enhancing their ability. In learning and memorising new words, a method is conventionally employed to describe words of a language A on a word note or a word card etc. to answer descriptions D using a language B different from that of the words by repeatedly looking only at the words to compare them with correct answers. In contrast, it is possible to try to spell the words of language A by looking at the description D in language B and then compare them with correct answers, thus to mark the words correctly memorized, or color them. It is usual at the next stage that these words having been memorized are skipped. There is also a need to review the entirety of words including the words having been memorized. The learning assistance function described below permits the preparation of a list of words having been memorized and the provision for discriminating between unmemorized words and memorised words to be electrically implemented, thus to assist the learning process. The electronic dictionary provided with such a function can be said to be a so called "electronic word note."

Such a function can be realized in a manner described below. The displays on the input and output display sections are as follows.

① The index word C and the description D corresponding to the index word C are displayed on the input and output display sections 13 and 14, respectively.

② The index word C and a correlated word E are respectively displayed on the first and second lines of the input display section 14, and the description D for the correlated word E is displayed on lines below the first line of the output display section 13. Such contents exist in the character code memory 9 in the form of a code. When the input/output [I/O] key is depressed, it is sufficient that the MPU collects the memory contents into the memory 5 prior to switching of the input/output mode. The MPU provides within the memory 5 a region of list of words used. The memory contents are preserved in a region in order of inputting (in order of indexing). In order that this region does not disappear even when power supply is cut, it is required to be comprised of battery backed up RAM, an electric read and write magnetic bubble memory or an EEPROM or the like.

When the quantity of output display is too much, it is sufficient to collect memory contents correspondingly limited to a partial region of the output display section 13, e.g., a region corresponding to the first line, or the first and second lines, or the like. This is because it is possible to put in the limited region a word that a user considers to be an important part of the description D by making use of the scrolling function.

When the contents of a dictionary are stored on the MCD, a particular mark, e.g., asterisk (attribute) etc. may be associated with main words at the head of the description to gather only words with the asterisk (attribute) associated therewith. In addition, every time a user depresses a key, the asterisk in the description D may move with it jumping from words close to the head of the description to those remote therefrom in order, whereby when the asterisk is located at a predetermined position, the key is released, thus to collect particular main words chosen. When the [I/O] key is depressed, all of the above-mentioned data or a desired portion thereof will be automatically selected and successively collected into the list of words used. In the collection, an attributed code for unmemorized words is automatically added to the word head.

A learning mode [LA/M] key is provided in the function key group 8. When this key is depressed, the learning mode of [A to M] is first set. depressed once more, the learning mode of [M to A] is set. By effecting the depression three and subsequent times, these modes are repeatedly set in turn.

Then, by depressing the select [N/AL] key, whether or not only the unmemorized words are learned as opposed to a review or all the words is selected. By repeating the depression of this key, both modes are selected in turn.

Then, every time the next [NEXT] key is depressed, pairs of the index words and the descriptions D collected into the list of words used can be successively selected from old ones to new ones. An implementation is possible such that when the next [NEXT] key is continuously depressed, the word selection can automatically shift to the next word every fixed time period, e.g., two seconds.

For example, where the learning mode is set to the mode of "A to M" by the learning mode key [LA/M] and is set to the unmemorized word code by the select [N/AL] key, when the [NEXT] key is then depressed, the index word C next in the order in regard to the unmemorized word groups of the index words C is displayed on the input display section 14. Responding to this, a user recalls the description D in the language B. Where the memory is not settled or a word concerned is unmemorized, when the answer [ANS] key is depressed, the description D (answer) of the corresponding list is displayed on the output display section 13. Thus, the user confirms his memory or newly bears a word in mind.

When the [NEXT] key is then depressed, the display on the output display section 13 is caused to disappear. Thus, the unmemorized index word C next in the order of the list is displayed on the input display section 14.

On the other hand, in the mode of [M to A] opposite to the above, when the next [NEXT] key is depressed, only the description D in the language B of the unmemorized index word next in the order is displayed on the output display section 13. Responding to this, the user recalls the index word C of the language A corresponding thereto to display the answer on the input display section 14 using the [ANS] key to thereby make confirmation. When the [NEXT] key is depressed, the answer on the input display section 14 is caused to disappear, and the description D of the unmemorized pair next in the order of the list is displayed on the output display section 13. Thus, memory learning can be conducted by confirming memories successively over the entire list.

When the learning mode is in a mode where the entire list is reviewed, the above-mentioned operation will be performed in connection with all words in the list with the attributed word code being disregarded.

When an index word C which has been unmemorized until now has been memorized by the process it is possible to change the attributed code of the word being displayed (, which indicates whether or not the word has been already memorized or has not yet been memorized) by depressing the attribute change [CH] key.

The function to effect a sound output of pronunciation of an index word C will be now explained. There are known various methods of effecting a sound output. Two examples thereamong will be described.

In accordance with the first method, a voice pronunced is subjected to A/D conversion for each index word C in the ROM as in a music CD, and the voice data thus obtained is stored along with the function code. During indexing, the voice data is copied into the memory 5 of the ROM player 2. When the pronunciation [PNC] key is depressed in the function key board 8, the portion designated by the function code is transferred to the pronunciation memory 30. The sound output controller 31 repeatedly reads, one time or a predetermined number of times every time the [PNC] key is depressed, or during which depression of the key is continued, a digital signal indicative of sound of a pronunciation of a particular word in a range designated by the function code thereafter to apply D/A conversion to the digital voice data by using the same means as the music CD, thus to effect a sound output by means of the sound output device 32 such as a speaker.

In accordance with the second method, a pronunciation sound memory 33 corresponding to pronunciation symbol is provided in the ROM player 2 to sequentially read the pronunciation sounds in accordance with the pronunciation symbol code and to prepare a time train of the intensity of sound on the basis of the position, kind of the accent and intonation to synthesize a sound output to store the synthesized sound output into the word sound memory 34, thus to effect a sound output using the sound output device 32. The second method can be used in the same manner as the first method.

The first method has the drawback that the memory capacity of the ROM becomes large, but the advantage that very delicate pronunciation can be reproduced with fidelity. On the other hand, the second method has no necessity of increasing the memory capacity of the ROM, but requires, on the side of the ROM player, a circuit for converting the code train to the pronunciation sound train, allowing it to have accent and has the drawback that a sound obtained is artificial and delicate pronunciation cannot be reproduced. It is preferable that the first and second methods are suitably used in accordance with the purpose of an electric dictionary in consideration of the respective advantages and drawbacks.

The function of effecting a sound output of a description D will be now explained. In this case, the ROM is required as its contents to have sound data of spelling and the pronunciation symbol of the index word C, and the description corresponding thereto. It is desirable for the purpose of indexing that the spelling and the pronunciation symbol are written as codes. The description D may be written as a data train obtained by applying A/D conversion to sound, or may be all written as codes of pronunciation symbol. In the case of the data train in which sound data has been subjected to A/D conversion in the index word S and the description D including pronunciation symbol which have been read into the memory 5 by the ROM player 2, the sound output can be obtained in accordance with the same system as that of ordinary music CD. In the case of the pronunciation symbol code train, by using the pronunciation sound memory 33, the sound output controller 31 applies sound synthesis processing to words transferred from the memory 5 to the pronunciation code memory 30 in succession one by one on the basis of the kind and the position of accent and the intonation, thus to effect a sound output using the sound output device 32. When the pronunciation [PND] key is depressed, the sound output is conducted in the same manner as in the case of the depression of the [PNC] key.

It is preferable that where sound cannot be sufficiently understood at one time because the sound output is temporary, a repeat [RP] key is provided at the function key group 8 to repeat a sound output once or a predetermined number of times every time the [RP] is depressed, or to continuously repeat a sound output when the [RP] is continuously depressed.

The electronic dictionary according to the illustrated embodiment is mainly used exclusively for private or personal use. In addition, if this electronic dictionary is connected to a central large optical disk in an office etc., an electronic dictionary using CD etc., or a terminal of information retrieval system through an interface, it can be used for the terminal thereof. In this instance, since the electronic dictionary has a key input function, display function, the function of preparing a list of words used, or the like, it is convenient for the terminal. Although the advantage with such an implementation is that the terminal is small-sized, an important feature is that a list of words used is prepared for private use, whereby individual persons can make a learning with their terminal being separated from a central system. Where the central system is an information retrieval system or a textbook etc., the list of words used can have a function of an electronic note or an electronic memorandom, thus to provide a file peculiar to an individual file.

How the electronic dictionary is used in the illustrated embodiment will be explained with reference to Fig. 1. An explanation will be made in connection with the electronic multiple or plural language dictionary where the index word C and the description D are different languages.

When powered, the MCD is driven by the MCD drive 3. When a user waits for a time period designated in advance until the rotation frequency of the MCD reaches a prescribed rotation frequency, or when an output of a rotation frequency sensor reaches a normal rotation frequency, the initial sequence data incorporated in the MCD is read by the microcomputer MPU. The data thus read is copied into the memory 5 and the character font memory 6 etc. It is to be noted that the initial sequence data is composed of various control programs, a Table showing an existence area (block) on the MCD of the word groups having the same combination with respect to the combination of the number of characters designated from the word head of the index word C and the description of the word concerned, the character font data for the characters, and the like.

The blank area of the memory 5, the character code memory 9 and the image memory 10 are then reset. Finally, by the control program set in advance, the system is automatically placed in input mode. Thus, "READY" is displayed on the output display section 13 of the display unit 12.

Every time the input/output [I/O] key in the function key group 8 is repeatedly depressed, the MPU effects a switching operation so that the mode of the system is changed to the input or output mode in turns. In the input mode, "READY" is displayed on the input display area 14. When the input mode [A/M] key in the function key group 8 is repeatedly depressed, the input modes of "A to M" (indicating the change from language A to language M) and "M to A" (indicating the change from language M to language A) are selected in turn. An explanation will be made in connection with the case where "A to M" mode is selected.

Where the mode of "A to M" is selected, when characters of an index word C of the language A are successively input from the word head thereof from the character input key board 7, they are displayed on the input display section 14 by the MPU. Where there is an error in the inputting operation, the error is deleted by the clear (CE) key in the function key group 8 to input a correct character for a second time. After inputting is correctly performed, when the [I/O] key is depressed, the mode shifts to the output mode.

The MPU recognizes the number of characters designated from the word head of the index word C, e.g., five characters to read a block position on the MCD corresponding thereto from the Table, thus allowing the readout controller 4 to read the block concerned. Ordinarily, the block has a memory capacity of about 2 KB. There are instances where a plurality of blocks are read. Then, the MPU indexes the index word C and its description D on the basis of the data of the block thus read to write them into an index data region of the memory 5.

Subsequently, the index word C is displayed on the first line of the input display section 14 and the description D is displayed on the output display section 13 from the head thereof. It is desirable that the pronunciation symbol is displayed on the first line. When the length of the description D is longer than the number of lines of the output display section 13, e.g., six lines, such a description cannot all be displayed. However, when the scroll UP [↑] key in the function key group 8 is depressed for a moment, it is possible to observe even such a description by scrolling line by line. When the [↑] key is successively depressed, scrolling is conducted every a predetermined time interval, e.g., per one second. The scrolling in an opposite direction is similarly performed by the scroll Down [↓] key in the function key group 8.

It is convenient that when all or a portion of the correlated word F in the description D appears on the first line of the output display section 13 by the scrolling in an upward direction, the correlated word F is also displayed on the second line of the input display section 14. This is an implementation of hierarchy such that the index word C and the correlated word F are assumed as a parent and a child, respectively. When a second correlated word F2 is displayed on the first line of the output display section 13 by the subsequent scrolling in an upward direction, a control can be performed such that the word on the first line of the output display section 13 is unchanged, whereas the word on the second line thereof is rewritten into the correlated word F2. Where scrolling in an upward direction is further conducted, even when the correlated word F in the description D disappears, such a display is convenient in that the correlated word F is displayed on the input display section 14.

In the case of scrolling in a downward direction, it is desirable to rewrite the correlated word F displayed on the input display section 14 when the correlated word F on the first line of the output display section 13 is down to the second line thereof. For this purpose, it is required to successively store the correlated words F extracted at the time of scrolling in an upward direction into the memory 5.

The learning assistance function in the illustrated embodiment will be now explained. This learning assistance function permits the preparation of a list of words and the provision of an attributed code for discriminating between unmemorized words and memorised words to be electrically implemented, thus to assist the learning memory. The electronic dictionary provided with such a function can be said to be so called "electronic word note". This learning assistance function can be realized in a manner described below. First, the displays on the input and output display sections are as follows.

① The index word C and the description D corresponding to the index word C are displayed on the input and output display sections 13 and 14, respectively.

② The index word C and a correlated word F are respectively displayed on the first and second lines of the input display section 14, and the description D for the correlated word F is displayed on lines below the first line of the output display section 13. Such contents exist in the character code memory 9 in the form of code. For preserving them, when the input/output [I/O] key is depressed, the MPU collects the memory contents into the memory 5 prior to switching of the input/output mode. The MPU provides a region of list of words used in the memory 5 to preserve the memory contents in the memory in order of inputting.

When the learning mode key is depressed, the learning mode of [A to M] is first set. When depressed once more, the learning mode of [M to A] is set. By effecting the depression of three and subsequent times, these modes are repeatedly set in turn.

Then, by depresssing the select [N/AL] key, whether or not only the unmemorized words are learned as opposed to a review of all the words is selected. By repeating the depression of this key, both modes are selected in turn.

In this condition, every time the next [NEXT] key is depressed, pairs of the index words and the descriptions D collected into the list of words used can be successively selected from the old ones to new ones. An implementation is possible such that when the next [NEXT] key is continuously depressed, the word selection can automatically shift to the next word every fixed time period e.g., two seconds.

Where the learning mode is set to the mode of "A to M" by the learning mode key [LA/M] and is set to the attribute unmemorized words by the select [N/AL] key, when the [NEXT] key is then depressed, the index word C next in the order in regard to the unmemorization word groups of the index word C is displayed on the input display section 14. Responding to this, a user recalls the translation or the description D in the language B corresponding thereto. Where the memory is not settled or a word concerned is unmemorized, when the answer [ANS] key is depressed, the translation or the description D (answer) of the corresponding list is displayed on the output display section 13. Thus, the user confirms his memory or newly bears a word in mind.

When the [NEXT] key is then depressed, the display on the output display section 13 is caused to disappear. Thus, the unmemorized index word A next in the order of the list is displayed on the input display section 14.

On the other hand, in the mode of [B to A], when the next [NEXT] key is depressed, only the description D in the language B corresponding to the unmemorized index word A next in the order is displayed on the output display section 13. Responding to this, the user recalls the index word C in the language A corresponding thereto to display the answer on the input display section 14 using the [ANS] key to thereby make confirmation. When the [NEXT] key is depressed, the correct answer on the input display section 14 is caused to disappear, and the next description D of the unmemorized word next in the order of the list is displayed on the output display section 13. Thus, examination over the entire list is successively conducted, thereby making it possible to use the electronic dictionary to assist in the memory learning.

The function of effecting sound output in the electronic dictionary according to the illustrated embodiment will be now exaplained.

When the pronunciation [PNC] key or [PND] key in the function key group 8 is depressed, sound output of an index word or a description is conducted from the sound output device such as a speaker.

The output mode has been described above. It is convenient that the mode is caused to shift to the input mode by depressing the [I/O] key irrespective of the state of the output mode.

The advantages obtained with the electronic dictionary according to the preferred embodiment are as follows:

(1) Since the index word indexed and the descriptions are automatically or manually registered into the memory 5 of the ROM player 2 whereby the word list is prepared, the electronic dictionary is very convenient in that it can conduct memory exercise of words by making use of the word list in addition to

**0 256 835**

use solely as an electronic dictionary, enabling a wide variety of practical applications.

(2) Since the attribute for discriminating between the unmemorized words and the memorized words can be given to each word of the word list, it is very convenient to conduct memory exercise of words. Since the learning can be conducted by skipping words which have been memorized, it is possible to conduct high efficient learning.

(3) Since the attribute for discriminating between the unmemorized words and the memorized words can be changed in accordance with the progress of learning, the electronic dictionary can adapt to correspond with the progress of learning, thus avoiding wasting time.

(4) Since sound output of the pronunciation of the index word C or the word to be learned can be conducted, study of correct pronunciation can be made.

(5) Since sound output of the description D can be also conducted, even an unlettered person or a blind person can use the electronic dictionary.

(6) When there is employed an electronic dictionary of small-size so that the diameter of the disk or the length of one side of the card is less than 3 inches and the memory capacity is in a range from 2 MB to 128 MB, it is easy to carry such a small-sized electronic dictionary because it can be inserted into a pocket of an European clothes or underwear.

**Claims**

1. An electronic dictionary comprising a large capacity memory medium for storing data E consisting of index words C and descriptions D relating to said index words C, and means for reading said data E from said memory medium to provide a visual display and, optionally, a printed or sound output, said electronic dictionary having a learning assistance function which automatically or manually enters all or a portion of the index words C and all or part of the corresponding descriptions D into a memory so as to prepare a stored word list, whereby the memorized words and/or corresponding descriptions D can be individually displayed on a display unit, thereby to assist a user in learning the words.

2. An electronic dictionary as claimed in claim 1, wherein said data E of the said index words C and said descriptions D for said index words C, are in a single language.

3. An electronic dictionary as claimed in claim 1, wherein said data E of said index words C and said descriptions D for said index words C, are in different languages.

4. An electronic dictionary as claimed in any preceding claim wherein a code for discrimination between previously unmemorised and memorized words is attributed to each index word C and corresponding description D whereby optionally each index word C and description D may only be called it previously unmemorised.

5. An electronic dictionary as claimed in any preceding claim wherein said word list is stored in a memory of said reading means.

6. An electronic dictionary as claimed in claim 4 and 5 wherein the index words C and the descriptions D are stored in a memory of said reading means along with respective attributed codes.

7. An electronic dictionary as claimed in any preceding claim wherein a sound output of the pronunciation of each index word C is conducted at the time of indexing and/or learning.

8. An electronic dictionary as claimed in any preceding claim wherein a sound output of each description D is conducted at the time of indexing and/or learning.

9. An electronic dictionary as claimed in any preceding claim wherein the descriptions include at least one of a pronunciation symbol for the corresponding index word, a translation of the index word, and a correlated word related to the index word.

0256835

## FIG.1

```
  1 ┌─────┐        ┌──────────────────────┐
────│ MCD │◄──────►│  READ OUT CONTROLLER │─ 4
    └─────┘        └──────────────────────┘
       ▲
  3 ┌──────────────┐
────│  MCD DRIVE   │
    └──────────────┘

  7 ┌──────────────────────┐        ┌──────────┐
────│ CHARACTER INPUT KEY  │        │   MPU    │
    └──────────────────────┘        └──────────┘
                                    ┌──────────┐
                                    │  MEMORY  │
                                    └──────────┘
                                        5
```

┌─────────────────────────┐
│ CHARACTER FONT MEMORY   │
└─────────────────────────┘
                      6

15

┌─────────────────────┐        14
│  DISPLAY CONTROLLER │      ┌──────────────────┐
└─────────────────────┘      │  INPUT DISPLAY   │
                             ├──────────────────┤ 12
┌──────────────────────┐     │  OUTPUT DISPLAY  │
│ CHARACTER CODE MEMORY│─ 9  └──────────────────┘
└──────────────────────┘          13

┌──────────────────┐
│  IMAGE MEMORY    │─ 10
└──────────────────┘

| I/O | A/M | CE | UP |
|-----|-----|-----|-----|
| DOWN | PNC/PND | R P | LA/M |
| N/AL | NEXT | ANS | CH |

8

33
┌──────────────────────────────┐
│ PRONUNCIATION SOUND MEMORY   │
└──────────────────────────────┘

31                                          32
┌──────────────────────────┐    ┌──────────────────────┐
│ SOUND OUTPUT CONTROLLER  │◄──►│ SOUND OUTPUT DEVICE  │
└──────────────────────────┘    └──────────────────────┘

┌──────────────────────────────┐
│ PRONUNCIATION CODE MEMORY    │─ 30
└──────────────────────────────┘

┌──────────────────────┐
│ WORD SOUND MEMORY    │─ 34
└──────────────────────┘

## FIG.2

| RP | I/O |
|-----|-----|
| LA/M | A/M | CE |
| N/AL | NEXT | UP |
| | ANS | DOWN |
| CH | PNC/PND |

20  22  24  2  23  21  7  8